# EUROPÄISCHE PATENTANMELDUNG

(11) **EP 1 617 573 A1**
(43) Veröffentlichungstag der Anmeldung: **18.01.2006**
(21) Anmeldenummer: 05014817.0
(22) Anmeldetag: 08.07.2005
(51) Int. Cl.: H04B 7/185

(54) **Mobilfunkkommunikation mit mobilen Endgeräten in sich im Luftraum befindlichen Transportmitteln, insbesondere Flugzeugen**

(30) Priorität: 16.07.2004 DE 102004034649
(71) Anmelder: Vodafone Holding GmbH, 40213 Düsseldorf (DE)
(72) Erfinder: Marc Levante, 40474 Düsseldorf (DE); Vel Dragon, Coquitlam, BC, V3E 2C1 (CA)
(74) Vertreter: Weisbrodt, Bernd

(57) **Zusammenfassung**

Die vorliegende Erfindung betrifft ein Verfahren zum Betreiben von in Mobilfunknetzen (28) betreibbaren mobilen Endgeräten (1, 2, 3) in sich im Luftraum (26) befindlichen Transportmitteln (6), insbesondere Flugzeugen, wobei eine Kommunikationsverbindung zwischen wenigstens einem sich in einem im Luftraum (26) befindlichen Transportmittel (6) befindlichen mobilen Endgerät (1, 2) und einem Mobilfunknetz (28) unter Nutzung wenigstens eines für aviatische Zwecke vorgesehenen Frequenzbandes erfolgt. Ferner betrifft die Erfindung ein System zum Betreiben von in Mobilfunknetzen (28) betreibbaren mobilen Endgeräten (1, 2, 3) in sich im Luftraum (26) befindlichen Transportmitteln (6), insbesondere Flugzeugen, wobei seitens des Transportmittels (6) eine in einem für aviatische Zwecke vorgesehenen Frequenzband arbeitende Sende/Empfangseinrichtung (7, 36, 48), eine Einrichtung (7, 45) zum Umwandeln des von dem Mobilfunknetz (28) genutzten Frequenzbandes in das für aviatische Zwecke vorgesehene Frequenzband, eine Einrichtung (7, 39) zum Umwandeln des für aviatische Zwecke vorgesehenen Frequenzbandes in das von dem Mobilfunknetz (28) genutzte Frequenzband und eine eine Nutzung des Frequenzbandes des Mobilfunknetzes (28) in dem Transportmittel (6) für eine Kommunikationsverbindung ermöglichende Einrichtung (7, 40, 41, 42, 43, 44) und dass seitens wenigstens einer Sende-/Empfangsstation (S, 8, 10, 12) des Mobilfunknetzes (28) eine Einrichtung (9, 11, 13, 60) zum Umwandeln des von dem Mobilfunknetz (28) genutzten Frequenzbandes in das für aviatische Zwecke vorgesehene Frequenzband und eine Einrichtung (9, 11, 13, 53) zum Umwandeln des für aviatische Zwecke vorgesehenen Frequenzbandes in das von dem Mobilfunknetz (28) genutzte Frequenzband vorgesehen sind.

## Beschreibung

Die vorliegende Erfindung betrifft ein Verfahren und ein System zum Betreiben von in Mobilfunknetzen betreibbaren mobilen Endgeräten in sich im Luftraum befindlichen Transportmitteln, insbesondere Flugzeugen.

Im Stand der Technik sind verschiedene Verfahren und Systeme bekannt, die Passagieren in bzw. auf Transportmitteln, insbesondere in Flugzeugen oder auf Schiffen, eine persönliche Kommunikation ermöglichen sollen.

So gibt es Lösungen, die Passagieren an Bord von Flugzeugen über Satellitenverbindungen einen Zugang zu bzw. in Datennetzwerke wie dem Internet ermöglichen. Neben dem relativ hohen Kostenaufwand für einen derartigen Zugang - sowohl seitens des den Zugang bereitstellenden Betreibers als auch seitens der Passagiere für die Nutzung des Zugangs - ist nachteilig, dass der Zugang zu bzw. in entsprechende Datennetzwerke nur mit relativ geringen Datenübertragungsraten ermöglicht werden kann, die insbesondere eine Übertragung von Sprache zu Kommunikationszwecken unmöglich machen.

Auch sind Lösungen bekannt, die ein Betreiben von in Mobilfunknetzen betreibbaren mobilen Endgeräten in Flugzeugen ermöglichen sollen. Dabei erfolgt eine Kommunikation zwischen einem sich in einem Flugzeug befindlichen mobilen Endgerät, insbesondere einem Mobilfunktelefon, und einem Mobilfunknetz über Satellitenkommunikationssysteme. Nachteilig sind dabei neben den relativ hohen Kosten derartiger Satellitenkommunikationssysteme insbesondere die bei Satelliten kommunikations systemen gegebenen hohen Signallaufzeiten, die eine entsprechende Kommunikation technisch aufwändig machen und die Qualität und Zuverlässigkeit einer entsprechenden Kommunikation stark beeinträchtigen.

Ferner ist ein in Flugzeugen einsetzbares Telekommunikationssystem bekannt, welches es Passagieren in einem entsprechend ausgestatteten Flugzeug ermöglicht vom Flugzeug aus Telefonanrufe zu tätigen. Neben dem relativ hohen Kostenaufwand für einen derartigen Telefonanruf ist nachteilig, dass Passagiere im Flugzeug nicht anrufbar sind, ein eigens im Flugzeug dafür vorgesehenes, fest im Flugzeug installiertes Telekommunikationsendgerät genutzt werden muss und ferner jeweils immer nur ein Passagier telefonieren kann.

Der Erfindung liegt in Anbetracht dieses Standes der Technik **die Aufgabe** zugrunde, unter Meidung der beschriebenen Nachteile mit einfachen und kostengünstigen Mitteln ein Betreiben von in Mobilfunknetzen betreibbaren mobilen Endgeräten in sich im Luftraum befindlichen Transportmitteln, insbesondere Flugzeugen, zu ermöglichen.

Verfahrensseitig wird zur technischen **Lösung** dieser Aufgabe erfindungsgemäß vorgeschlagen, dass eine Kommunikationsverbindung zwischen wenigstens einem sich in einem im Luftraum befindlichen Transportmittel befindlichen mobilen Endgerät und einem Mobilfunknetz unter Nutzung wenigstens eines für aviatische Zwecke vorgesehenen Frequenzbandes erfolgt.

Der Erfindung liegt die Erkenntnis zugrunde, dass ein sich im Luftraum befindliches Transportmittel durch Nutzung eines für aviatische Zwecke vorgesehenen Frequenzbandes, das heißt durch eine Frequenznutzung im Frequenzbereich flugtechnischer Anwendungen, insbesondere Speiseverbindungen für Systeme eines Mobilfunkdienstes, quasi nach Art einer Zelle einer Basisstation eines Mobilfunknetzes an das Mobilfunknetz anschließbar ist, wobei das sich im Luftraum befindliche Transportmittel eine bewegliche Zelle bildet, welche wiederum potentiell bewegliche, im Mobilfunknetz betreibbare mobile Endgeräte aufweist.

Die erfindungsgemäße Nutzung eines für aviatische Zwecke vorgesehenen Frequenzbandes für eine Kommunikationsverbindung zwischen einem sich in einem im Luftraum befindlichen Transportmittel befindlichen mobilen Endgerät und einem Mobilfunknetz ermöglicht so mit einfachen und kostengünstigen Mitteln ein Betreiben von in Mobilfunknetzen betreibbaren mobilen Endgeräten in sich im Luftraum befindlichen Transportmitteln, insbesondere Flugzeugen.

In einer vorteilhaften Ausgestaltung der Erfindung erfolgt die Kommunikationsverbindung zwischen dem sich im Luftraum befindlichen Transportmittel befindlichen mobilen Endgerät und dem Mobilfunknetz über wenigstens eine erdgebundene Sende-/Empfangsstation des Mobilfunknetzes. Erfindungsgemäß können dadurch kostenintensive und technisch aufwändige Satellitenkommunikationssysteme entfallen und denen immanente Kommunikationsbeeinträchtigungen, insbesondere hinsichtlich Qualität und Zuverlässigkeit, vermieden werden.

Vorteilhafterweise ist in dem sich im Luftraum befindlichen Transportmittel für die Kommunikationsverbindung das Frequenzband des Mobilfunknetzes nutzbar. Dadurch können von Passagieren deren mobile Endgeräte im Transportmittel, insbesondere am jeweiligen Sitzplatz der Passagiere im Transportmittel genutzt werden. Ferner bleibt den Passagieren so eine ungewohnte und mitunter umständliche bzw. extra zu erlernende Bedienung von ansonsten seitens des Transportmittels vorgesehenen Kommunikations endeinrichtungen erspart.

Eine weitere Ausgestaltung der Erfindung ist gekennzeichnet durch eine Umwandlung des von dem Mobilfunknetz genutzten Frequenzbandes in das für aviatische Zwecke vorgesehene Frequenzband. Vorteilhafterweise werden im Rahmen einer Kommunikationsverbindung von dem Mobilfunknetz an das sich in dem im Luftraum befindlichen Transportmittel befindlichen mobilen Endgerät zu übertragende Signale im Frequenzband des Mobilfunknetzes seitens der erdgebundenen Sende-/Empfangsstation des Mobilfunknetzes in Signale im für aviatische Zwecke vorgesehenen Frequenzband umgewandelt und werden seitens des sich im Luftraum befindlichen Transportmittels diese Signale im für aviatische Zwecke vorgesehenen Frequenzband in Signale im Frequenzband des Mobilfunknetzes umgewandelt. Vorteilhafterweise werden im Rahmen einer Kommunikationsverbindung von dem sich in dem im Luftraum befindlichen Transportmittel befindlichen mobilen Endgerät an das Mobilfunknetz zu übertragende Signale im Frequenzband des Mobilfunknetzes seitens des sich im Luftraum befindlichen Transportmittels in Signale im für aviatische Zwecke vorgesehenen Frequenzband umgewandelt und werden seitens der erdgebundenen Sende-/Empfangsstation des Mobilfunknetzes diese Signale im für aviatische Zwecke vorgesehenen Frequenzband in Signale im Frequenzband des Mobilfunknetzes umgewandelt.

Eine weitere besonders vorteilhafte Ausgestaltung der Erfindung ist gekennzeichnet durch eine Kompensation von Doppler-Verschiebungen von Signalen im für aviatische Zwecke vorgesehenen Frequenzband seitens des sich im Luftraum befindlichen Transportmittels. Durch die erfindungsgemäße Kompensation von aufgrund der Bewegung des Transportmittels gegebenen Frequenzverschiebungen - sogenannter Doppler-Effekt - seitens der im Rahmen der Kommunikationsverbindung zwischen Transportmittel und Sende-/Empfangsstation auszutauschenden Signalen wird eine sichere und stabile Kommunikationsverbindung gewährleistet, insbesondere bei relativ schnellen Bewegungen des Transportmittels in einem Geschwindigkeitsbereich des Transportmittels von bis zu etwa 1.000,00 Km/h sowie Steig- und/oder Sinkflügen.

In einer weiteren besonders vorteilhaften Ausgestaltung der Erfindung wird die Kommunikationsverbindung bei Eintritt oder bei Verlassen des Luftraums durch das Transportmittel, das heißt beim Starten oder Landen des Transportmittels, beendet, insbesondere um Störungen von für Start- und/oder Landevorgänge von Transportmitteln sicherheitsrelevanter empfindlicher Einrichtungen durch die erfindungsgemäße Kommunikation sicher ausschließen zu können. In einer bevorzugten Ausgestaltung der Erfindung wird zum Beenden der Kommunikationsverbindung das wenigstens eine sich im Transportmittel befindliche mobile Endgerät abgeschaltet wird, vorzugsweise automatisch.

In einer weiteren Ausgestaltung der Erfindung ist das Mobilfunknetz ein digitales zellulares Mobilfunknetz nach dem GSM-Standard, vorzugsweise im Frequenzband von etwa 1800 bis etwa 1900 MHz.

Vorteilhafterweise ist das für aviatische Zwecke vorgesehene Frequenzband ein Frequenzband im 5 GHz Bereich, vorzugsweise im Bereich von etwa 5090 MHz bis etwa 5150 MHz und/oder im Bereich von etwa 5150 MHz bis etwa 5250 MHz.

In einer weiteren vorteilhaften Ausgestaltung der Erfindung sind in dem sich im Luftraum befindlichen Transportmittel bis zu 50 mobile Endgeräte gleichzeitig nutzbar.

Vorteilhafterweise nutzt die erdgebundene Sende-/Empfangsstation des Mobilfunknetzes wenigstens vier verschiedene Trägerfrequenzen im für aviatische Zwecke vorgesehenen Frequenzband. In einer weiteren vorteilhaften Ausgestaltung der Erfindung ermöglichen wenigstens vier erdgebundene Sende-/Empfangsstationen des Mobilfunknetzes zusammengehörend mit sich wiederholenden Mustern den Zugang zur Kommunikationsverbindung mit verschiednen Trägerfrequenzen. Vorteilhafterweise ist der Zugang zur Kommunikationsverbindung mit sich wiederholenden Mustern mittels FDMA (Frequency Division Multiple Access) und/oder TDMA (Time Division Multiple Access) als Netzzugangsverfahren implementiert.

Gemäß einer weiteren vorteilhaften Ausgestaltung der Erfindung weisen zwei erdgebundene Sende-/Empfangsstationen einen Abstand von etwa 70 Km bis etwa 90 Km zueinander auf. In einer besonders vorteilhaften Ausgestaltung der Erfindung sind die erdgebundenen Sende-/Empfangsstationen entlang der möglichen Fluglinien bzw. -routen des Transportmittels angeordnet. Durch diese Maßnahme müssen lediglich die erdgebundenen Sende-/Empfangsstationen des Mobilfunknetzes entlang der möglichen Fluglinien bzw. -routen des Transportmittels erfindungsgemäß ausgebildet werden. Auch können so bei Bedarf lediglich die erdgebundenen Sende-/Empfangsstationen des Mobilfunknetzes entlang der möglichen Fluglinien bzw. -routen des Transportmittels durch Nachrüstung erfindungsgemäß ausgebildet werden, beispielsweise bei Änderung von Fluglinien bzw.- routen.

Eine weitere vorteilhafte Ausgestaltung der Erfindung ist gekennzeichnet durch eine Anwendung des erfindungsgemäßen Verfahrens in einem Luftraumbereich mit einem Abstand von bis zu etwa 20,0 Km vom Erdboden, vorzugsweise von bis zu etwa 15,0 Km vom Erdboden.

Vorteilhafterweise findet das erfindungsgemäße Verfahren Anwendung bei einer Geschwindigkeit des Transportmittels von bis zu etwa 1.000,00 Km/h, vorzugsweise von bis zu etwa 800 Km/h.

Die Aufgabe wird systemseitig dadurch **gelöst**, dass seitens des Transportmittels eine in einem für aviatische Zwecke vorgesehenen Frequenzband arbeitende Sende-/Empfangseinrichtung, eine Einrichtung zum Umwandeln des von dem Mobilfunknetz genutzten Frequenzbandes in das für aviatische Zwecke vorgesehene Frequenzband, eine Einrichtung zum Umwandeln des für aviatische Zwecke vorgesehenen Frequenzbandes in das von dem Mobilfunknetz genutzte Frequenzband und eine eine Nutzung des Frequenzbandes des Mobilfunknetzes in dem Transportmittel für eine Kommunikationsverbindung ermöglichende Einrichtung und seitens wenigstens einer Sende-/Empfangsstation des Mobilfunknetzes eine Einrichtung zum Umwandeln des von dem Mobilfunknetz genutzten Frequenzbandes in das für aviatische Zwecke vorgesehene Frequenzband und eine Einrichtung zum Umwandeln des für aviatische Zwecke vorgesehenen Frequenzbandes in das von dem Mobilfunknetz genutzte Frequenzband vorgesehen sind.

Vorteilhafterweise weist das Transportmittel eine Einrichtung zur Kompensation von Doppler-Verschiebungen von Signalen im für aviatische Zwecke vorgesehenen Frequenzband auf. Durch die Kompensationseinrichtung seitens des Transportmittels sind aufgrund der Bewegung des Transportmittels gegebene Frequenzverschiebungen seitens der im Rahmen der Kommunikationsverbindung zwischen Transportmittel und Sende-/Empfangsstation auszutauschenden Signale kompensierbar und eine sichere und stabile Kommunikationsverbindung gewährleistbar, insbesondere bei relativ schnellen Bewegungen des Transportmittels in einem Geschwindigkeitsbereich des Transportmittels von bis zu etwa 1.000,00 Km/h sowie Steig- und/oder Sinkflügen.

In einer weiteren Ausgestaltung der Erfindung ist die Sende-/Empfangsstation des Mobilfunknetzes eine erdgebundene Sende-/Empfangsstation des Mobilfunknetzes.

Vorteilhafterweise weist die seitens des Transportmittels vorgesehene, eine Nutzung des Frequenzbandes des Mobilfunknetzes in dem Transportmittel für eine Kommunikationsverbindung ermöglichende Einrichtung eine im Frequenzband des Mobilfunknetzes arbeitende Verstärkerstufe mit dynamischer Kanalauswahl auf.

In einer weiteren vorteilhaften Ausgestaltung der Erfindung weist die seitens des Transportmittels vorgesehene, eine Nutzung des Frequenzbandes des Mobilfunknetzes in dem Transportmittel für eine Kommunikationsverbindung ermöglichende Einrichtung wenigstens eine im Frequenzband des Mobilfunknetzes arbeitende Antenne auf.

Vorteilhafterweise ist seitens der Sende-/Empfangsstation des Mobilfunknetzes eine im Frequenzband des Mobilfunknetzes arbeitende Verstärkerstufe mit Kanalauswahl vorgesehen.

Gemäß einer weiteren Ausgestaltung der Erfindung ist seitens des Transportmittels eine Logik- und Steuereinrichtung zur Frequenzzuordnung und - modulation vorgesehen, wobei die Frequenzmodulation vorzugsweise dynamisch erfolgt.

Seitens der Sende-/Empfangsstation des Mobilfunknetzes ist vorteilhafterweise eine Logik- und Steuereinrichtung zur Frequenzzuordnung und -modulation vorgesehen, wobei die Frequenzmodulation vorzugsweise nach einem programmgesteuerten Muster erfolgt.

Eine weitere vorteilhafte Ausgestaltung der Erfindung sieht seitens des Transportmittels eine Einrichtung zur Synchronisierung der für eine Kommunikationsverbindung im Frequenzband des Mobilfunknetzes genutzten Frequenzen zwischen dem Transportmittel und der Sende-/Empfangsstation des Mobilfunknetzes vor, wobei die Synchronisierung vorzugsweise unter Nutzung eines Satellitennavigationssystems (GPS (Global Positioning System)) erfolgt. In einer weiteren besonders vorteilhaften Ausgestaltung der Erfindung ist seitens der Sende-/Empfangsstation des Mobilfunknetzes eine Einrichtung zur Synchronisierung der für eine Kommunikationsverbindung im Frequenzband des Mobilfunknetzes genutzten Frequenzen zwischen dem Transportmittel und der Sende-/Empfangsstation des Mobilfunknetzes vorgesehen, wobei die Synchronisierung vorzugsweise unter Nutzung eines Satellitennavigationssystems (GPS (Global Positioning System)) erfolgt.

Vorteilhafterweise ist seitens des Transportmittels eine Einrichtung zur Regelung der Ein- und/oder Ausgangssignalpegel der Signale im Frequenzband des Mobilfunknetzes vorgesehen. In einer weiteren Ausgestaltung der Erfindung ist seitens der Sende-/Empfangsstation des Mobilfunknetzes eine Einrichtung zur Regelung der Ein- und/oder Ausgangssignalpegel der Signale im Frequenzband des Mobilfunknetzes vorgesehen.

Eine weitere besonders vorteilhafte Ausgestaltung der Erfindung ist gekennzeichnet durch eine Einrichtung zum Beenden der Kommunikationsverbindung bei Eintritt oder bei Verlassen des Luftraums durch das Transportmittel, das heißt beim Starten oder Landen des Transportmittels. So sind insbesondere Störungen von für Start- und/oder Landevorgänge von Transportmitteln sicherheitsrelevanter empfindlicher Einrichtungen durch die erfindungsgemäße Kommunikation sicher ausschließbar. In einer bevorzugten Ausgestaltung der Erfindung schaltet die Einrichtung zum Beenden der Kommunikationsverbindung sich im Transportmittel befindliche mobile Endgeräte ab, vorzugsweise automatisch.

Vorteilhafterweise ist das Mobilfunknetz ein digitales zellulares Mobilfunknetz nach dem GSM-Standard, vorzugsweise im Frequenzband von etwa 1800 bis etwa 1900 MHz.

In einer weiteren Ausgestaltung der Erfindung ist das für aviatische Zwecke vorgesehene Frequenzband ein Frequenzband im 5 GHz Bereich, vorzugsweise im Bereich von etwa 5090 MHz bis etwa 5150 MHz und/oder im Bereich von etwa 5150 MHz bis etwa 5250 MHz.

Vorteilhafterweise ist systemseitig wenigstens ein mobiles Endgerät seitens des Transportmittels vorgesehen und ist das erfindungsgemäße System zur Ausführung eines erfindungsgemäßen Verfahrens ausgebildet.

Weitere Einzelheiten, Merkmale und Vorteile der Erfindung werden nachfolgend anhand der in den Figuren dargestellten Ausführungsbeispiele näher erläutert. Dabei zeigen:
- Fig. 1: in einer schematischen Darstellung eine erfindungsgemäße Mobilfunkkommunikation;
- Fig. 2: in einer weiteren schematischen Darstellung eine erfindungsgemäße Mobilfunkkommunikation;
- Fig. 3: in einer schematischen Darstellung zu kompensierende Doppler-Verschiebungen von Signalen im für aviatische Zwecke vorgesehenen Frequenzband;
- Fig. 4: in einem logischen Blockdiagramm die elektronischen Einrichtungen für die erfindungsgemäße Mobilfunkkommunikation seitens des Transportmittels und
- Fig. 5: in einem logischen Blockdiagramm die elektronischen Einrichtungen für die erfindungsgemäße Mobilfunkkommunikation seitens einer erdgebundenen Sende-/Empfangsstation.

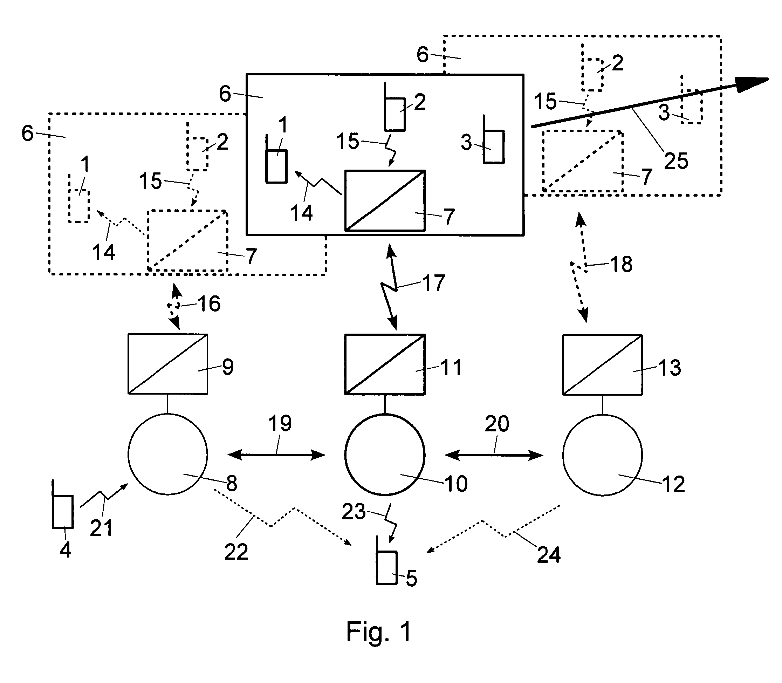

Fig. 1 zeigt ein sich im Luftraum befindliches Transportmittel 6, vorliegend ein Flugzeug, welches sich entlang einer Fluglinie bzw. route mit einer Geschwindigkeit von etwa 800 Km/h bewegt. Die Bewegung ist vorliegend mittels des mit 25 gekennzeichneten Pfeils und der gestrichelt dargestellten Transportmittel 6 entlang der Orientierung des Pfeils 25 zu dargestellt. In dem Transportmittel befinden sich in einem Mobilfunknetz betreibbare mobile Endgeräte 1, 2, 3. Um eine Kommunikationsverbindung zwischen den sich im Transportmittel 6 befindlichen mobilen Endgeräten 1, 2, 3 und dem Mobilfunknetz zu ermöglichen, weist das Transportmittel 6 verschiedene Kommunikationseinrichtungen auf, welche in der Prinzipdarstellung nach Fig. 1 insgesamt mit dem Bezugszeichen 7 gekennzeichnet sind. Die Kommunikationseinrichtungen 7 ermöglichen eine Nutzung des Frequenzbandes des Mobilfunknetzes im Transportmittel 6 für die sich im Transportmittel 6 befindlichen mobilen Endgeräte 1, 2, 3 und ermöglichen eine kommunikationstechnische Anbindung 16, 17, 18 des Transportmittels 6 an das erdgebundene Mobilfunknetz unter Nutzung eines für aviatische Zwecke vorgesehenen Frequenzbandes, vorliegend im 5 GHz-Bereich.

Das Mobilfunknetz - vorliegend ein digitales zellulares Mobilfunknetz nach dem GSM-Standard - weist verschiedene erdgebundene Sende-/Empfangstationen 8, 10, 12 auf, welche jeweils mit einer Einrichtung 9, 11, 13 versehen sind. Die Einrichtungen 9, 11, 13, welche zur kommunikationstechnische Anbindung 16, 17, 18 des Transportmittels 6 an das erdgebundene Mobilfunknetz unter Nutzung eines für aviatische Zwecke vorgesehenen Frequenzbandes dienen, weisen zu diesem Zweck Frequenzwandler auf, die eine Umwandlung des Frequenzbandes des Mobilfunknetzes in das für aviatische Zwecke vorgesehene Frequenzband bzw. eine Umwandlung des für aviatische Zwecke vorgesehenen Frequenzbandes in das Frequenzband des Mobilfunknetzes ermöglichen.

Zwischen erdgebundenen, in dem Mobilfunknetz betreibbaren mobilen Endgeräten 4, 5 und sich im Transportmittel 6 befindlichen mobilen Endgeräten 1, 2, 3 kann so eine Kommunikationsverbindung unter Nutzung des für aviatische Zwecke vorgesehenen Frequenzbandes aufgebaut werden, wobei die mobilen Endgeräte 1, 2, 3 in dem Transportmittel 6 das Frequenzband des Mobilfunknetzes nutzen.

So kann beispielsweise ein sich im Transportmittel 6 befindliches mobiles Endgerät 1 von einem sich im Mobilfunknetz befindlichen, erdgebundenen mobilen Endgerät 4 angerufen werden. An der Kommunikationsverbindung sind dabei vorliegend zunächst eine das Frequenzband des Mobilfunknetzes nutzende Kommunikationsverbindung 21 zwischen dem erdgebundenen mobilen Endgerät 4 und der Sende-/Empfangsstation 8 des Mobilfunknetzes, eine das für aviatische Zwecke vorgesehene Frequenzband nutzende Kommunikationsverbindung 16 zwischen der Sende-/Empfangsstation 8 des Mobilfunknetzes und den Kommunikationseinrichtungen 7 des Transportmittels 6 und eine das Frequenzband des Mobilfunknetzes nutzende Kommunikationsverbindung 14 im Transportmittel 6 zwischen den Kommunikationseinrichtungen 7 des Transportmittels 6 und dem sich im Transportmittel 6 befindlichen mobilen Endgerät 1 beteiligt. Da das Transportmittel 6 sich mit einer relativ hohen Geschwindigkeit von etwa 800 Km/h bewegt, wird der Sende-/Empfangsbereich der Sende-/Empfangsstation 8 relativ schnell verlassen. Um eine stabile Kommunikationsverbindung aufrechterhalten zu können, muss daher eine Kanalübergabe - ein sogenannter Handover - erfolgen. Vorliegend wird ein solcher Handover vorteilhafterweise von den Kommunikationseinrichtungen 7 des Transportmittels 6 koordiniert, wobei ein Wechsel von der Kommunikationsverbindung 16 zwischen dem Transportmittel 6 und der Sende-/Empfangsstation 8 zu der Kommunikationsverbindung 17 zwischen dem Transportmittel 6 und der Sende-/Empfangsstation 10 erfolgt. Ferner bleibt im Rahmen der Kommunikationsverbindung das erdgebundene mobile Endgerät 4 im Mobilfunknetz über die Kommunikationsverbindung 19 zwischen den Sende-/Empfangsstationen 8 und 10 im Mobilfunknetz entsprechend angebunden. Die Kommunikationsverbindung zwischen dem erdgebundenen mobilen Endgerät 4 und dem sich im Transportmittel 6 befindlichen mobilen Endgerät 1 erfolgt dann somit unter Nutzung der Kommunikationsverbindungen 21, 19, 17 und 14.

Ferner kann beispielsweise ein sich im Transportmittel 6 befindliches mobiles Endgerät 2 ein sich im Mobilfunknetz befindliches, erdgebundenen mobiles Endgerät 5 anrufen.

An der Kommunikationsverbindung sind dabei vorliegend zunächst eine das Frequenzband des Mobilfunknetzes nutzende Kommunikationsverbindung 15 im Transportmittel 6 zwischen den Kommunikationseinrichtungen 7 des Transportmittels 6 und dem sich im Transportmittel 6 befindlichen mobilen Endgerät 2, eine das für aviatische Zwecke vorgesehene Frequenzband nutzende Kommunikationsverbindung 16 zwischen den Kommunikationseinrichtungen 7 des Transportmittels 6 und der Sende-/Empfangsstation 8 des Mobilfunknetzes und eine das Frequenzband des Mobilfunknetzes nutzende Kommunikationsverbindung 22 zwischen der Sende-/Empfangsstation 8 des Mobilfunknetzes und dem erdgebundenen mobilen Endgerät 5 beteiligt. Da das Transportmittel 6 sich mit einer relativ hohen Geschwindigkeit von etwa 800 Km/h bewegt, wird der Sende-/Empfangsbereich der Sende-/Empfangsstation 8 relativ schnell verlassen. Um eine stabile Kommunikationsverbindung aufrechterhalten zu können, muss daher eine Kanalübergabe - ein sogenannter Handover - erfolgen. Vorliegend wird ein solcher Handover vorteilhafterweise von den Kommunikationseinrichtungen 7 des Transportmittels 6 koordiniert, wobei ein Wechsel von der Kommunikationsverbindung 16 zwischen dem Transportmittel 6 und der Sende-/Empfangsstation 8 zu der Kommunikationsverbindung 17 zwischen dem Transportmittel 6 und der Sende-/Empfangsstation 10 sowie ein Wechsel von der Kommunikationsverbindung 17 zwischen dem Transportmittel 6 und der Sende-/Empfangsstation 10 zu der Kommunikationsverbindung 18 zwischen dem Transportmittel 6 und der Sende-/Empfangsstation 12 erfolgt. Im Rahmen der Kommunikationsverbindung erfolgt die Kommunikationsverbindung zu dem erdgebundenen mobilen Endgerät 5 im Mobilfunknetz über die Kommunikationsverbindung 22 bzw. 23 bzw. 24 zwischen den Sende-/Empfangsstationen 8 bzw. 10 bzw. 12. Die Kommunikationsverbindung zwischen sich im Transportmittel 6 befindlichen mobilen Endgerät 2 und dem erdgebundenen mobilen Endgerät 5 erfolgt dann somit unter Nutzung der Kommunikationsverbindungen 15, 16 und 22 bzw. 15, 17 und 23 bzw. 15, 18 und 24.

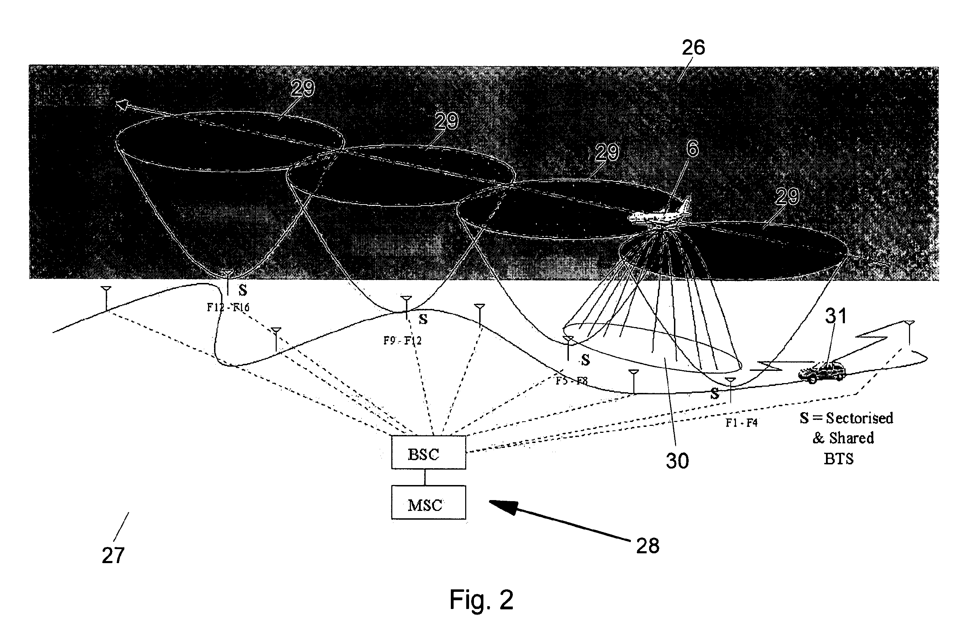

Fig. 2 zeigt entsprechend Fig. 1 ein Mobilfunknetz 28 mit den hierarchisch strukturierten Komponenten eines dem GSM-Standard entsprechenden Mobilfunknetzes 28. An einer Kommunikation im Mobilfunknetz 28 sind dementsprechend Funkzellen bereitstellende bzw. ausbildende Sende-/Empfangsstations-Untersysteme (BTS (Base Station Subsystem)) (vgl. in Fig. 2 die teilweise mit S gekennzeichneten Sende-/Empfangsstationen) beteiligt, die wiederum in Gruppen von einer Sende-/Empfangsstation-Steuereinrichtung (BSC (Base Station Controller)) gesteuert und verwaltet werden, welche mit einer Vermittlungsstelle MSC (Mobile Switching Centre (Vermittlungsstelle)) verbunden sind. Bei den mit S gekennzeichneten Sende-/Empfangsstations-Untersysteme (BTS (Base Station Subsystem)) handelt es sich um Sende-/Empfangsstationen 8, 10, 12 entsprechend Fig. 1 die unter anderem Einrichtungen 9, 11, 13 zur kommunikationstechnischen Anbindung 16, 17, 18 des Transportmittels 6 an das erdgebundene Mobilfunknetz unter Nutzung eines für aviatische Zwecke vorgesehenen Frequenzbandes aufweisen. In Fig. 2 erfolgt eine Kommunikationsverbindung zwischen einem sich im Flugzeug befindlichen mobilen Endgerät 1, 2, 3 und einem erdgebundenen, sich vorliegend in einem Kraftfahrzeug befindlichen mobilen Endgerät 31.

Anhand von Fig. 2 ist zu erkennen, dass die ausgewählten, mit S gekennzeichneten Sende-/Empfangsstations-Untersysteme (BTS (Base Station Subsystem)) des Mobilfunknetzes 28 erdgebunden entlang der Fluglinie- bzw. route des Flugzeuges 6 angeordnet sind. Dabei bewegt sich das Flugzeug 6 durch die Antennenkeulen 29 der mit S gekennzeichneten Sende-/Empfangsstations-Untersysteme (BTS (Base Station Subsystem)) des Mobilfunknetzes 28, die entsprechend von der Antennenkeule 30 der Kommunikationseinrichtungen 7 des Flugzeugs 6 gekreuzt werden.

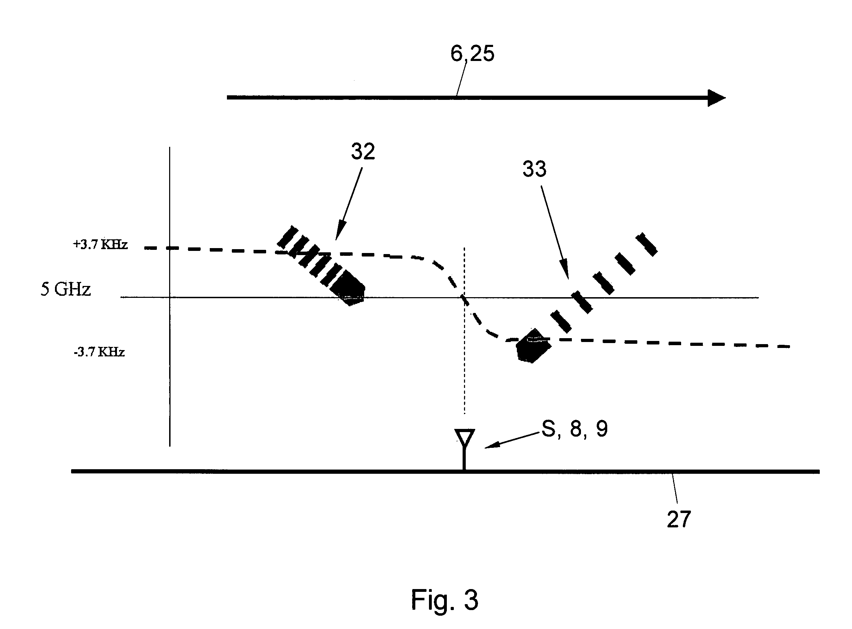

Fig. 3 zeigt die aufgrund der Bewegung 25 mit einer Geschwindigkeit von etwa 800 Km/h des Transportmittels 6 gegebenen Frequenzverschiebungen - sogenannter Doppler-Effekt - seitens der im Rahmen der Kommunikationsverbindung zwischen dem Transportmittel 6 und einer auf dem Erdboden 27 angeordneten Sende-/Empfangsstation S, 8, 9 auszutauschenden Signale, welche erfindungsgemäß seitens der Kommunikationseinrichtungen 7 des Transportmittels 6 kompensiert werden, um eine sichere und stabile Kommunikationsverbindung gewährleisten zu können. Anhand von Fig. 3 ist zu erkennen, dass bei Annäherung des Transportmittels 6 an eine Sende-/Empfangsstation S, 8, 9, eine Frequenzkompression 32 und bei Entfernung des Transportmittels 6 von einer Sende-/Empfangsstation S, 8, 9, eine Frequenzexpansion 33 erfolgt (Doppler-Effekt). Im für aviatische Zwecke vorgesehenen Frequenzband von etwa 5 GHz und bei einer Bewegungsgeschwindigkeit des Transportmittels 6 von etwa 800 Km/h beträgt die aufgrund des Doppler-Effekts gegebene Frequenzverschiebung etwa +/- 3,7 KHz.

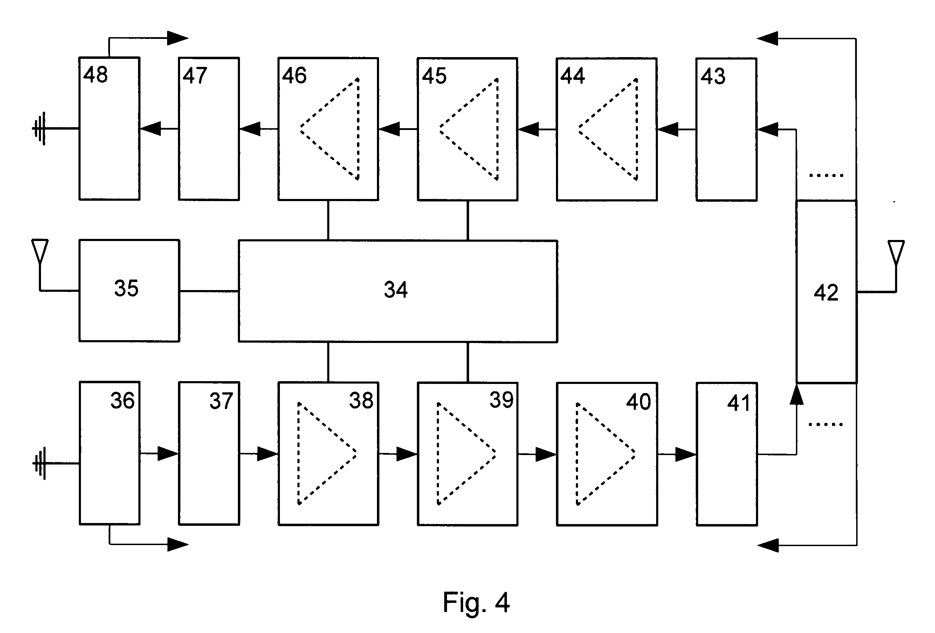

Fig. 4 zeigt in einem logischen Blockdiagramm die seitens des Transportmittels 6 vorgesehenen elektronischen Einrichtungen 7 für die erfindungsgemäße Mobilfunkkommunikation. Das Transportmittel 6 weist eine Logik- und Steuereinrichtung 34 zur Frequenzzuordnung und -modulation auf, wobei die Frequenzmodulation dynamisch erfolgt. Zur Synchronisierung der für eine Kommunikationsverbindung im Frequenzband des Mobilfunknetzes 28 genutzten Frequenzen zwischen dem Transportmittel 6 und einer erdgebundenen Sende-/Empfangsstation S, 8, 10, 12 des Mobilfunknetzes 28 ist vorliegend ein GPS-Empfänger 35 vorgesehen, der mit der Logik- und Steuereinrichtung 34 verbunden ist.

Signalempfangsseitig weist das Transportmittel 6 eine in einem für aviatische Zwecke vorgesehenen Frequenzband arbeitende Empfangseinrichtung 36 auf. Die Empfangseinrichtung 36 speist die empfangenen Signale im für aviatische Zwecke vorgesehenen Frequenzband in einen rauscharmen Verstärker 37, welcher die Signale einer Einrichtung 38 zur Kompensation von Doppler-Verschiebungen von Signalen im für aviatische Zwecke vorgesehenen Frequenzband zuführt. Die kompensierten Signale werden anschließend einer Einrichtung 39 zum Umwandeln des für aviatische Zwecke vorgesehenen Frequenzbandes in das von dem Mobilfunknetz genutzte Frequenzband zugeführt und umgewandelt. Die Einrichtungen 38 und 39 sind dabei mit der Logik- und Steuereinrichtung 34 verbunden und werden von dieser gesteuert. Die von der Einrichtung 39 gewandelten Signale werden einer eine Nutzung des Frequenzbandes des Mobilfunknetzes in dem Transportmittel 6 für eine Kommunikationsverbindung ermöglichende Einrichtung 40 zugeführt, welche die Signale einer Einrichtung 41 zur Regelung der Ausgangssignalpegel der Signale im Frequenzband des Mobilfunknetzes zuführt, welche diese ausgeregelten Signale schließlich einer GSM-Antenne 42 zur Bereitstellung des Frequenzbandes des Mobilfunknetzes im Transportmittel 6 zuführt.

Signalsendeseitig weist das Transportmittel 6 eine Einrichtung 43 zur Regelung der Eingangssignalpegel von im Transportmittel 6 mittels der GSM-Antenne 42 empfangenen Signalen im Frequenzband des Mobilfunknetzes auf, welche empfangene Signale hinsichtlich der Eingangssignalpegel einregelt und dann einer eine Nutzung des Frequenzbandes des Mobilfunknetzes in dem Transportmittel 6 für eine Kommunikationsverbindung ermöglichenden Einrichtung 44 zuführt. Von der Einrichtung 44 werden die Signale einer Einrichtung 45 zum Umwandeln des Frequenzbandes des Mobilfunknetzes in das von dem für aviatische Zwecke vorgesehenen Frequenzband zugeführt und umgewandelt. Die gewandelten Signale werden dann einer Einrichtung 46 zur Kompensation von Doppler-Verschiebungen von Signalen im für aviatische Zwecke vorgesehenen Frequenzband zugeführt. Die Einrichtungen 45 und 46 sind dabei mit der Logik- und Steuereinrichtung 34 verbunden und werden von dieser gesteuert. Von der Einrichtung 46 zur Kompensation von Doppler-Verschiebungen von Signalen im für aviatische Zwecke vorgesehenen Frequenzband werden die kompensierten Signale dann in einen im für aviatische Zwecke vorgesehenen Frequenzband arbeitenden Leistungsverstärker 47 gespeist und von diesem einer in einem für aviatische Zwecke vorgesehenen Frequenzband arbeitenden Sendeeinrichtung 48 zugeführt und ausgesendet.

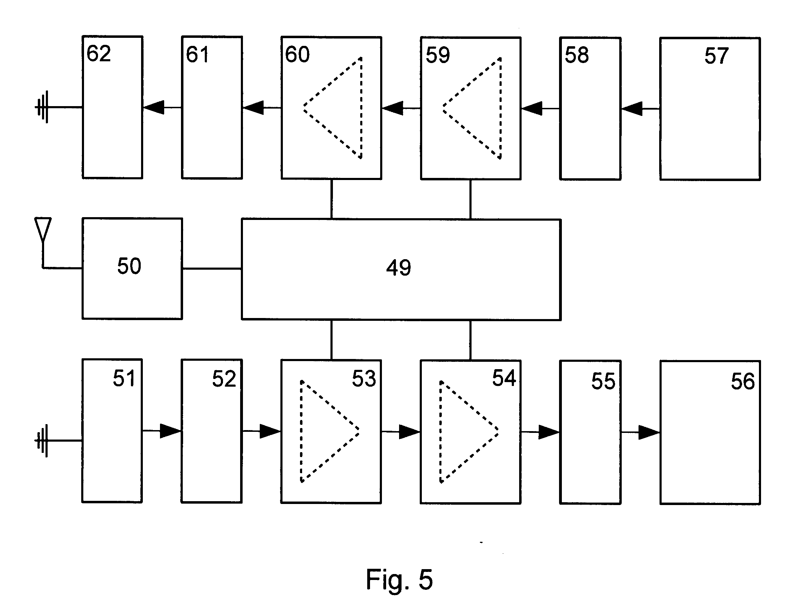

Fig. 5 zeigt in einem logischen Blockdiagramm die seitens einer erdgebundenen Sende-/Empfangsstation S, 8, 10 bzw. 12 vorgesehenen elektronischen Einrichtungen für die erfindungsgemäße Mobilfunkkommunikation. Die Sende-/Empfangsstationen weisen jeweils eine Logik- und Steuereinrichtung 49 zur Frequenzzuordnung und -modulation auf, wobei die Frequenzmodulation vorzugsweise nach einem programmgesteuerten Muster mittels FDMA und/oder TDMA als Netzzugangsverfahren erfolgt. Zur Synchronisierung der für eine Kommunikationsverbindung im Frequenzband des Mobilfunknetzes genutzten Frequenzen zwischen dem Transportmittel 6 und einer erdgebundenen Sende-/Empfangsstation S, 8, 10 bzw. 12 des Mobilfunknetzes ist vorliegend ein GPS-Empfänger 50 vorgesehen, der mit der Logik- und Steuereinrichtung 49 verbunden ist.

Signalempfangsseitig weisen die erdgebundenen Sende-/Empfangsstation S, 8, 10 bzw. 12 jeweils eine in einem für aviatische Zwecke vorgesehenen Frequenzband arbeitende Empfangseinrichtung 51 auf. Die Empfangseinrichtung 51 speist die empfangenen Signale im für aviatische Zwecke vorgesehenen Frequenzband in einen rauscharmen Verstärker 52, welcher die Signale einer Einrichtung 53 zum Umwandeln des für aviatische Zwecke vorgesehenen Frequenzbandes in das von dem Mobilfunknetz genutzte Frequenzband zuführt und umwandelt. Die von der Einrichtung 53 gewandelten Signale werden einer eine Nutzung des Frequenzbandes des Mobilfunknetzes für eine Kommunikationsverbindung ermöglichenden Einrichtung 54 zugeführt, welche die Signale einer Einrichtung 55 zur Regelung der Ausgangssignalpegel der Signale im Frequenzband des Mobilfunknetzes zuführt. Einrichtung 55 zur Regelung der Ausgangssignalpegel der Signale im Frequenzband des Mobilfunknetzes ist mit einer Sendekanäle des Mobilfunknetzes koordinierenden Einrichtung 56 verbunden. Die Einrichtungen 53 und 54 sind dabei mit der Logik- und Steuereinrichtung 49 verbunden und werden von dieser gesteuert.

Signalsendeseitig weisen die erdgebundenen Sende-/Empfangsstation S, 8, 10 bzw. 12 jeweils eine Einrichtung 57 zur Koordination der Empfangskanäle des Mobilfunknetzes auf. Zu sende Signale im Frequenzband des Mobilfunknetzes werden von einer Einrichtung 58 zur Regelung der Eingangssignalpegel von zu sendenden Signalen im Frequenzband des Mobilfunknetzes hinsichtlich der Eingangssignalpegel einregelt und dann einer eine Nutzung des Frequenzbandes des Mobilfunknetzes für eine Kommunikationsverbindung ermöglichenden Einrichtung 59 zuführt. Von der Einrichtung 59 werden die Signale einer Einrichtung 60 zum Umwandeln des Frequenzbandes des Mobilfunknetzes in das von dem für aviatische Zwecke vorgesehenen Frequenzband zugeführt und umgewandelt. Die gewandelten Signale werden dann einer in einen im für aviatische Zwecke vorgesehenen Frequenzband arbeitenden Leistungsverstärker 61 gespeist und von diesem einer in einem für aviatische Zwecke vorgesehenen Frequenzband arbeitenden Sendeeinrichtung 62 zugeführt und ausgesendet. Die Einrichtungen 59 und 60 sind dabei mit der Logik- und Steuereinrichtung 49 verbunden und werden von dieser gesteuert.

Die in den Figuren dargestellten Ausführungsbeispiele dienen lediglich der Erläuterung der Erfindung und sind für diese nicht beschränkend.

### Bezugszeichenliste

- 1: mobiles Endgerät (Transportmittel (6))
- 2: mobiles Endgerät (Transportmittel (6))
- 3: mobiles Endgerät (Transportmittel (6))
- 4: mobiles Endgerät (Transportmittel (6))
- 5: mobiles Endgerät (Transportmittel (6))
- 6: Transportmittel/Flugzeug
- 7: Kommunikationseinrichtungen (Transportmittel (6))
- 8: Sende-/Empfangsstation (Mobilfunknetz (28))
- 9: Frequenzwandler (Sende-/Empfangsstation (8))
- 10: Sende-/Empfangsstation (Mobilfunknetz (28))
- 11: Frequenzwandler (Sende-/Empfangsstation (10))
- 12: Sende-/Empfangsstation (Mobilfunknetz (28))
- 13: Frequenzwandler (Sende-/Empfangsstation (12))
- 14: Kommunikationsverbindung
- 15: Kommunikationsverbindung
- 16: Kommunikationsverbindung
- 17: Kommunikationsverbindung
- 18: Kommunikationsverbindung
- 19: Kommunikationsverbindung
- 20: Kommunikationsverbindung
- 21: Kommunikationsverbindung
- 22: Kommunikationsverbindung
- 23: Kommunikationsverbindung
- 24: Kommunikationsverbindung
- 25: Bewegung (Transportmittel (6))
- 26: Luftraum (Transportmittel (6))
- 27: Erdboden
- 28: Mobilfunknetz
- 29: Antennenkeule (Sende-/Empfangsstation (S))
- 30: Antennenkeule (Transportmittel (6))
- 31: mobiles Endgerät/Kraftfahrzeug
- 32: Frequenzkompression
- 33: Frequenzexpansion
- 34: Logik und Steuereinrichtung (Logic and Control (Dynamic Modulation Control))
- 35: GPS-Empfänger
- 36: Empfangsantenne (5 GHz Rx Antenna)
- 37: rauscharmer Verstärker (5 GHz LNA (low noise amplifier))
- 38: Einrichtung zur Kompensation von Doppler-Verschiebungen (Doppler Compensation Stage)
- 39: Frequenzwandler (5 GHz to 1.800 MHz Frequency Shift Stage)
- 40: Relaissystem (1.800 MHz Non Heterodyne Repeater Stage)
- 41: Einrichtung zur Regelung des Ausgangsleistungspegels (GSM Output Power Level Control)
- 42: GSM-Antenne
- 43: Einrichtung zur Regelung des Eingangsleistungspegels (GSM Input Power Level Control)
- 44: Relaissystem (1.800 MHz Non Heterodyne Repeater Stage)
- 45: Frequenzwandler (1.800 MHz to 5 GHz Frequency Shift Stage)
- 46: Einrichtung zur Kompensation von Doppler-Verschiebungen (Doppler Compensation Stage)
- 47: Leistungsverstärker (5 GHz PA (power amplifier))
- 48: Sendeantenne (5 GHz Tx Antenna)
- 49: Logik und Steuereinrichtung (Logic and Control (Software Defined Modulation Plan))
- 50: GPS-Empfänger
- 51: Empfangsantenne (5 GHz Rx Antenna)
- 52: rauscharmer Verstärker (5 GHz LNA (low noise amplifier))
- 53: Frequenzwandler (5 GHz to 1.800 MHz Frequency Shift Stage)
- 54: Relaissystem (1.800 MHz Non Heterodyne Repeater Stage)
- 55: Einrichtung zur Regelung des Ausgangsleistungspegels (GSM Output Power Level Control)
- 56: Sendekanäle (GSM Channels BTS 1.800 MHz Receive Channel)
- 57: Empfangskanäle (GSM Channels BTS 1.800 MHz Transmit Channel)
- 58: Einrichtung zur Regelung des Eingangsleistungspegels (GSM Input Power Level Control)
- 59: Relaissystem (1.800 MHz Non Heterodyne Repeater Stage)
- 60: Frequenzwandler (1.800 MHz to 5 GHz Frequency Shift Stage)
- 61: Leistungsverstärker (5 GHz PA (power amplifier))
- 62: Sendeantenne (5 GHz Tx Antenna)
- BSC: Base Station Controller (Sende-/Empfangsstation-Steuereinrichtung)
- BTS: Base Station Subsystem (Sende-/Empfangsstation-Untersystem)
- MSC: Mobile Switching Centre (Vermittlungsstelle)
- S: Sectorised and Shared BTS (Sende-/Empfangsstation-Untersystem)

## Patentansprüche

1. Verfahren zum Betreiben von in Mobilfunknetzen (28) betreibbaren mobilen Endgeräten (1, 2, 3) in sich im Luftraum (26) befindlichen Transportmitteln (6), insbesondere Flugzeugen,
**dadurch gekennzeichnet,**
**dass** eine Kommunikationsverbindung zwischen wenigstens einem sich in einem im Luftraum (26) befindlichen Transportmittel (6) befindlichen mobilen Endgerät (1, 2) und einem Mobilfunknetz (28) unter Nutzung wenigstens eines für aviatische Zwecke vorgesehenen Frequenzbandes erfolgt.

2. Verfahren nach Anspruch 1, **dadurch gekennzeichnet, dass** die Kommunikationsverbindung zwischen dem sich im Luftraum (26) befindlichen Transportmittel (6) befindlichen mobilen Endgerät (1, 2) und dem Mobilfunknetz (28) über wenigstens eine erdgebundene Sende-/Empfangsstation (8, 10, 12, S) des Mobilfunknetzes (28) erfolgt.

3. Verfahren nach Anspruch 1 oder Anspruch 2, **dadurch gekennzeichnet, dass** in dem sich im Luftraum (26) befindlichen Transportmittel (6) für die Kommunikationsverbindung das Frequenzband des Mobilfunknetzes (28) nutzbar ist.

4. Verfahren nach einem der Ansprüche 1 bis 3, **gekennzeichnet durch** eine Umwandlung des von dem Mobilfunknetz (28) genutzten Frequenzbandes in das für aviatische Zwecke vorgesehene Frequenzband.

5. Verfahren nach einem der Ansprüche 2 bis 4, **dadurch gekennzeichnet, dass** im Rahmen einer Kommunikationsverbindung von dem Mobilfunknetz (28) an das sich in dem im Luftraum (26) befindlichen Transportmittel (6) befindlichen mobilen Endgerät (1) zu übertragende Signale im Frequenzband des Mobilfunknetzes (28) seitens der erdgebundenen Sende-/Empfangsstation (8, 10) des Mobilfunknetzes (28) in Signale im für aviatische Zwecke vorgesehenen Frequenzband umgewandelt werden und seitens des sich im Luftraum (26) befindlichen Transportmittels (6) diese Signale im für aviatische Zwecke vorgesehenen Frequenzband in Signale im Frequenzband des Mobilfunknetzes (28) umgewandelt werden.

6. Verfahren nach einem der Ansprüche 2 bis 5, **dadurch gekennzeichnet, dass** im Rahmen einer Kommunikationsverbindung von dem sich in dem im Luftraum (26) befindlichen Transportmittel (6) befindlichen mobilen Endgerät (2) an das Mobilfunknetz (28) zu übertragende Signale im Frequenzband des Mobilfunknetzes (28) seitens des sich im Luftraum (26) befindlichen Transportmittels (6) in Signale im für aviatische Zwecke vorgesehenen Frequenzband umgewandelt werden und seitens der erdgebundenen Sende-/Empfangsstation (8, 10, 12) des Mobilfunknetzes (28) diese Signale im für aviatische Zwecke vorgesehenen Frequenzband in Signale im Frequenzband des Mobilfunknetzes (28) umgewandelt werden.

7. Verfahren nach einem der Ansprüche 1 bis 6, **gekennzeichnet durch** eine Kompensation von Doppler-Verschiebungen von Signalen im für aviatische Zwecke vorgesehenen Frequenzband seitens des sich im Luftraum (26) befindlichen Transportmittels (6).

8. Verfahren nach einem der Ansprüche 1 bis 7, **dadurch gekennzeichnet, dass** das die Kommunikationsverbindung bei Eintritt (Starten) und/oder bei Verlassen (Landen) des Luftraums (26) durch das Transportmittel (6) beendet wird.

9. Verfahren nach Anspruch 8, **dadurch gekennzeichnet, dass** das wenigstens eine sich im Transportmittel (6) befindliche mobile Endgerät (1, 2, 3) zum Beenden der Kommunikationsverbindung abgeschaltet wird, vorzugsweise automatisch.

10. Verfahren nach einem der Ansprüche 1 bis 9, **dadurch gekennzeichnet, dass** das Mobilfunknetz (28) ein digitales zellulares Mobilfunknetz nach dem GSM-Standard ist, vorzugsweise im Frequenzband von etwa 1800 bis etwa 1900 MHz.

11. Verfahren nach einem der Ansprüche 1 bis 10, **dadurch gekennzeichnet, dass** das für aviatische Zwecke vorgesehene Frequenzband ein Frequenzband im 5 GHz Bereich ist, vorzugsweise im Bereich von etwa 5090 MHz bis etwa 5150 MHz und/oder im Bereich von etwa 5150 MHz bis etwa 5250 MHz.

12. Verfahren nach einem der Ansprüche 1 bis 11, **dadurch gekennzeichnet, dass** in dem sich im Luftraum (26) befindlichen Transportmittel (6) bis zu 50 mobile Endgeräte (1, 2, 3) gleichzeitig nutzbar sind.

13. Verfahren nach einem der Ansprüche 2 bis 12, **dadurch gekennzeichnet, dass** die erdgebundene Sende-/Empfangsstation (8, 10, 12) des Mobilfunknetzes (28) wenigstens vier verschiedene Trägerfrequenzen im für aviatische Zwecke vorgesehenen Frequenzband nutzt.

14. Verfahren nach Anspruch 12 oder Anspruch 13, **dadurch gekennzeichnet, dass** wenigstens vier erdgebundene Sende-/Empfangsstationen (8, 10, 12) des Mobilfunknetzes (28) zusammengehörend mit sich wiederholenden Mustern den Zugang zur Kommunikationsverbindung mit verschiednen Trägerfrequenzen ermöglichen.

15. Verfahren nach Anspruch 14, **dadurch gekennzeichnet, dass** der Zugang zur Kommunikationsverbindung mit sich wiederholenden Mustern mittels FDMA und/oder TDMA als Netzzugangsverfahren implementiert ist.

16. Verfahren nach einem der Ansprüche 2 bis 15, **dadurch gekennzeichnet, dass** zwei erdgebundene Sende-/Empfangsstationen (8, 10, 12) einen Abstand von etwa 70 Km bis etwa 90 Km zueinander aufweisen.

17. Verfahren nach einem der Ansprüche 2 bis 16, **dadurch gekennzeichnet, dass** die erdgebundenen Sende-/Empfangsstationen (8, 10, 12) entlang der möglichen Fluglinien bzw. -routen des Transportmittels (6) angeordnet sind.

18. Verfahren nach einem der Ansprüche 1 bis 17, **gekennzeichnet durch** eine Anwendung in einem Luftraumbereich mit einem Abstand von bis zu etwa 20,0 Km vom Erdboden, vorzugsweise von bis zu etwa 15,0 Km.

19. Verfahren nach einem der Ansprüche 1 bis 18, **gekennzeichnet durch** eine Anwendung bei einer Geschwindigkeit des Transportmittels (6) von bis zu etwa 1.000,00 Km/h, vorzugsweise von bis zu etwa 800 Km/h.

20. System zum Betreiben von in Mobilfunknetzen (28) betreibbaren mobilen Endgeräten (1, 2, 3) in sich im Luftraum (26) befindlichen Transportmitteln (6), insbesondere Flugzeugen,
**dadurch gekennzeichnet,**
**dass** seitens des Transportmittels (6) eine in einem für aviatische Zwecke vorgesehenen Frequenzband arbeitende Sende-/Empfangseinrichtung (7, 36, 48), eine Einrichtung (7, 45) zum Umwandeln des von dem Mobilfunknetz (28) genutzten Frequenzbandes in das für aviatische Zwecke vorgesehene Frequenzband, eine Einrichtung (7, 39) zum Umwandeln des für aviatische Zwecke vorgesehenen Frequenzbandes in das von dem Mobilfunknetz (28) genutzte Frequenzband und eine eine Nutzung des Frequenzbandes des Mobilfunknetzes (28) in dem Transportmittel (6) für eine Kommunikationsverbindung ermöglichende Einrichtung (7, 40, 41, 42, 43, 44) und dass seitens wenigstens einer Sende-/Empfangsstation (S, 8, 10, 12) des Mobilfunknetzes (28) eine Einrichtung (9, 11, 13, 60) zum Umwandeln des von dem Mobilfunknetz (28) genutzten Frequenzbandes in das für aviatische Zwecke vorgesehene Frequenzband und eine Einrichtung (9, 11, 13, 53) zum Umwandeln des für aviatische Zwecke vorgesehenen Frequenzbandes in das von dem Mobilfunknetz (28) genutzte Frequenzband vorgesehen sind.

21. System nach Anspruch 20, **dadurch gekennzeichnet, dass** das Transportmittel (6) eine Einrichtung (7, 38, 46) zur Kompensation von Doppler-Verschiebungen von Signalen im für aviatische Zwecke vorgesehenen Frequenzband aufweist.

22. System nach Anspruch 20 oder Anspruch 21, **dadurch gekennzeichnet, dass** die Sende-/Empfangsstation (S, 8, 10, 12) des Mobilfunknetzes (28) eine erdgebundene Sende-/Empfangsstation des Mobilfunknetzes (28) ist.

23. System nach einem der Ansprüche 20 bis 22, **dadurch gekennzeichnet, dass** die seitens des Transportmittels (6) vorgesehene, eine Nutzung des Frequenzbandes des Mobilfunknetzes (28) in dem Transportmittel (6) für eine Kommunikationsverbindung ermöglichende Einrichtung (7, 40, 41, 42, 43, 44) eine im Frequenzband des Mobilfunknetzes (28) arbeitende Verstärkerstufe (40, 44) mit dynamischer Kanalauswahl aufweist.

24. System nach einem der Ansprüche 20 bis 23, **dadurch gekennzeichnet, dass** die seitens des Transportmittels (6) vorgesehene, eine Nutzung des Frequenzbandes des Mobilfunknetzes (28) in dem Transportmittel (6) für eine Kommunikationsverbindung ermöglichende Einrichtung (7, 40, 41, 42, 43, 44) wenigstens eine im Frequenzband des Mobilfunknetzes arbeitende Antenne (42) aufweist.

25. System nach einem der Ansprüche 20 bis 24, **dadurch gekennzeichnet, dass** seitens der Sende-/Empfangsstation (S, 8, 10, 12) des Mobilfunknetzes (28) eine im Frequenzband des Mobilfunknetzes (28) arbeitende Verstärkerstufe (54, 59) mit Kanalauswahl vorgesehen ist.

26. System nach einem der Ansprüche 20 bis 25, **dadurch gekennzeichnet, dass** seitens des Transportmittels (6) eine Logik- und Steuereinrichtung (34) zur Frequenzzuordnung und -modulation vorgesehen ist, wobei die Frequenzmodulation vorzugsweise dynamisch erfolgt.

27. System nach einem der Ansprüche 20 bis 26, **dadurch gekennzeichnet, dass** seitens der Sende-/Empfangsstation (S, 8, 10, 12) des Mobilfunknetzes (28) eine Logik- und Steuereinrichtung (49) zur Frequenzzuordnung und - modulation vorgesehen ist, wobei die Frequenzmodulation vorzugsweise nach einem programmgesteuerten Muster erfolgt.

28. System nach einem der Ansprüche 20 bis 27, **dadurch gekennzeichnet, dass** seitens des Transportmittels (6) eine Einrichtung (34, 35) zur Synchronisierung der für eine Kommunikationsverbindung im Frequenzband des Mobilfunknetzes (28) genutzten Frequenzen zwischen dem Transportmittel (6) und der Sende-/Empfangsstation (S, 8, 10, 12) des Mobilfunknetzes (28) vorgesehen ist, wobei die Synchronisierung vorzugsweise unter Nutzung eines Satellitennavigationssystems (GPS) erfolgt.

29. System nach einem der Ansprüche 20 bis 28, **dadurch gekennzeichnet, dass** seitens der Sende-/Empfangsstation (S, 8, 10, 12) des Mobilfunknetzes (28) eine Einrichtung (49, 50) zur Synchronisierung der für eine Kommunikationsverbindung im Frequenzband des Mobilfunknetzes (28) genutzten Frequenzen zwischen dem Transportmittel (6) und der Sende-/Empfangsstation (S, 8, 10, 12) des Mobilfunknetzes (28) vorgesehen ist, wobei die Synchronisierung vorzugsweise unter Nutzung eines Satellitennavigationssystems (GPS) erfolgt.

30. System nach einem der Ansprüche 20 bis 29, **dadurch gekennzeichnet, dass** seitens des Transportmittels (6) eine Einrichtung (41, 43) zur Regelung der Ein- und/oder Ausgangssignalpegel der Signale im Frequenzband des Mobilfunknetzes (28) vorgesehen ist.

31. System nach einem der Ansprüche 20 bis 30, **dadurch gekennzeichnet, dass** seitens der Sende-/Empfangsstation (S, 8, 10, 12) des Mobilfunknetzes (28) eine Einrichtung (55, 58) zur Regelung der Ein- und/oder Ausgangssignalpegel der Signale im Frequenzband des Mobilfunknetzes (28) vorgesehen ist.

32. System nach einem der Ansprüche 20 bis 31, **gekennzeichnet durch** eine Einrichtung zum Beenden der Kommunikationsverbindung bei Eintritt (Starten) und/oder bei Verlassen (Landen) des Luftraums (26) **durch** das Transportmittel (6).

33. System nach Anspruch 32, **dadurch gekennzeichnet, dass** die Einrichtung zum Beenden der Kommunikationsverbindung sich im Transportmittel (6) befindliche mobile Endgeräte (1, 2, 3) abschaltet, vorzugsweise automatisch.

34. System nach einem der Ansprüche 20 bis 33, **dadurch gekennzeichnet, dass** das Mobilfunknetz (28) ein digitales zellulares Mobilfunknetz nach dem GSM-Standard ist, vorzugsweise im Frequenzband von etwa 1800 bis etwa 1900 MHz.

35. System nach einem der Ansprüche 20 bis 34, **dadurch gekennzeichnet, dass** das für aviatische Zwecke vorgesehene Frequenzband ein Frequenzband im 5 GHz Bereich ist, vorzugsweise im Bereich von etwa 5090 MHz bis etwa 5150 MHz und/oder im Bereich von etwa 5150 MHz bis etwa 5250 MHz.

36. System nach einem der Ansprüche 20 bis 35, **dadurch gekennzeichnet, dass** Sende-/Empfangsstationen (S, 8, 10, 12) des Mobilfunknetzes (28) entlang der möglichen Fluglinien bzw. -routen des Transportmittels (6) angeordnet sind.

37. System nach einem der Ansprüche 20 bis 36, **dadurch gekennzeichnet, dass** zwei Sende-/Empfangsstationen (S, 8, 10, 12) des Mobilfunknetzes (28) einen Abstand von etwa 70 Km bis etwa 90 Km zueinander aufweisen.

38. System nach einem der Ansprüche 20 bis 37, **gekennzeichnet durch** wenigstens ein mobiles Endgerät (1, 2, 3) seitens des Transportmittels (6).

39. System nach einem der Ansprüche 20 bis 38, **dadurch gekennzeichnet, dass** dieses zur Ausführung eines Verfahrens nach einem der Ansprüche 1 bis 19 ausgebildet ist.
